(19) Europäisches Patentamt
European Patent Office
Office européen des brevets

(11) **EP 0 958 685 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
***H04L 27/34*** *(2006.01)*

(21) Anmeldenummer: **98945128.1**

(22) Anmeldetag: **31.07.1998**

(86) Internationale Anmeldenummer:
**PCT/EP1998/004789**

(87) Internationale Veröffentlichungsnummer:
**WO 1999/025103 (20.05.1999 Gazette 1999/20)**

(54) **VERFAHREN UND SCHALTUNGSANORDNUNG ZUR ÜBERTRAGUNG AUSGEWÄHLTEN SIGNALPUNKTEN EINER SIGNALKONSTELLATION**

METHOD AND CIRCUIT ARRANGEMENT FOR IMPROVED DATA TRANSMISSION

PROCEDE ET CONFIGURATION DE CIRCUIT DESTINES A UNE TRANSMISSION DE DONNEES AMELIOREE

(84) Benannte Vertragsstaaten:
**AT BE CH CY DE DK ES FR GB IE IT LI NL PT SE**

(30) Priorität: **06.11.1997 DE 19748880**

(43) Veröffentlichungstag der Anmeldung:
**24.11.1999 Patentblatt 1999/47**

(73) Patentinhaber: **Deutsche Telekom AG
53113 Bonn (DE)**

(72) Erfinder: **HUBER, Klaus
D-64283 Darmstadt (DE)**

(56) Entgegenhaltungen:
EP-A- 0 674 413       EP-A- 0 703 689
US-A- 4 937 844       US-A- 5 493 586
US-A- 5 583 892

• KSCHISCHANG F R ET AL: "OPTIMAL NONUNIFORM SIGNALING FOR GAUSSIAN CHANNELS" IEEE TRANSACTIONS ON INFORMATION THEORY, Bd. 39, Nr. 3, 1. Mai 1993, Seiten 913-929, XP000383031 New York, US in der Anmeldung erwähnt
• LIVINGSTON J N: "SHAPING USING VARIABLE-SIZE REGIONS" IEEE TRANSACTIONS ON INFORMATION THEORY, Bd. 38, Nr. 4, 1. Juli 1992, Seiten 1347-1353, XP000287144 New York, US
• HUBER KLAUS: "Decoding algorithms for block codes over two-dimensional signal-constellations" PROCEEDINGS OF THE 1994 IEEE INTERNATIONAL SYMPOSIUM ON INFORMATION THEORY; TRODHEIM, NORW JUN 27-JUL 1 1994, 1994, XP002095658 IEEE Int Symp Inf Theor Proc; IEEE International Symposium on Information Theory - Proceedings 1994 IEEE, Piscataway, NJ, US

EP 0 958 685 B1

**Beschreibung**

Die Erfindung betrifft ein Verfahren und eine Schaltungsanordnung zur verbesserten Datenübertragung nach dem Oberbegriff des Patentanspruchs 1 bzw. des Patentanspruchs 4.

In der Nachrichtentechnik sind Übertragungsverfahren bekannt und auch in der Praxis im Einsatz, die orthogonale Basisfunktionen zur Darstellung des zu übertragenden Signals benutzen. Derartige Übertragungsverfahren sind zum Beispiel in dem Buch R.E. Blahut, Digital Transmission of Information, Addison-Wesley, Reading, 1990, Kapitel 2 und 3, beschrieben.

Ein Nachrichtensignal s(t) im Basisband wird hierbei als Summe von orthogonalen Basisfunktionen dargestellt. Um die Nachricht $m = (m_0, m_1, m_2 \ldots m_{k-1})$, wobei die $m_j$ aus einem passend gewählten Alphabet ausgewählt sind, in das Signal s(t) einzubinden, bildet man das Signal wie folgt:

$$s(t) = m_0 f_0(t) + m_1 f_1(t) + \ldots + m_{K-1} f_{K-1}(t).$$

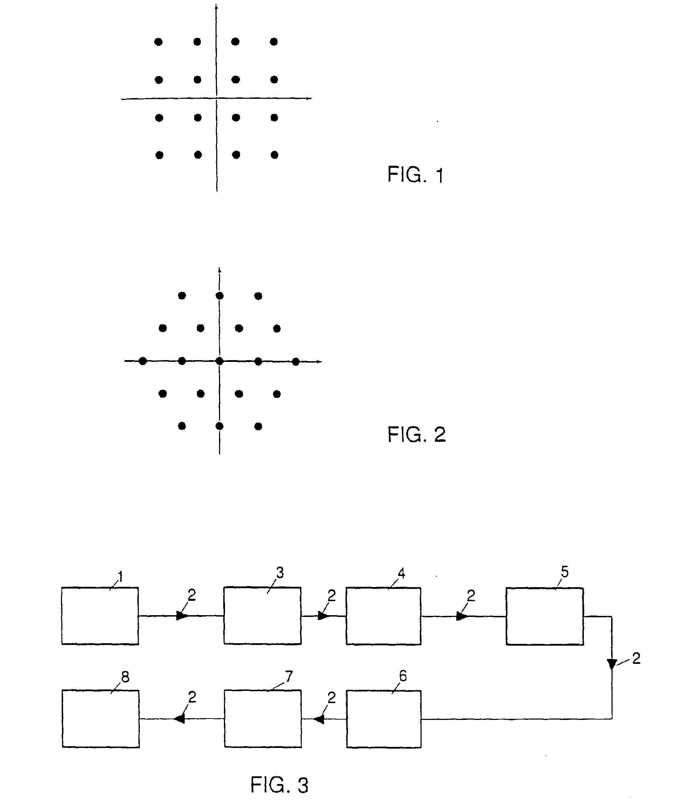

Ein Nachrichtensignal kann demzufolge als Punkt im K-dimensionalen Raum angesehen werden und zwar charakterisiert durch den Wertetupel $(m_0, m_1, \ldots, m_{K-1})$. Die Gesamtheit aller zulässigen Signale bezeichnet man als Signalkonstellation. In der Praxis besonders beliebt sind zweidimensionale Signalkonstellationen, wie zum Beispiel die in Fig. 1 der vorliegenden Anmeldung abgebildete sogenannte 16-QAM Signalkonstellation. Diese 16-QAM Signalkonstellation ist zum Beispiel in dem obengenannten Buch, Seite 63 beschrieben. Bei allen hier betrachteten Signalkonstellationen sei der Mindestabstand zweier Signalpunkte auf 1 normiert. Die bekannten Übertragungsverfahren zur effizienten Nutzung von mehrstufigen Modulationsverfahren ermöglichen jedoch noch nicht die optimale Nutzung der Signalenergie von Signalkonstellationen. Zum einen können nämlich Signalkonstellationen, die sehr effizient sind, allerdings den Nachteil haben, daß die Anzahl der Signalpunkte keine Zweierpotenz ist und zum anderen können häufig benutzte Signalkonstellationen, wie zum Beispiel 16-QAM noch nicht in einfacher und optimaler Weise dazu genutzt werden, geringe Datenraten zu übertragen.

Grundsätzliche theoretische Untersuchungen zur verbesserten Datenübertragung und zur effizienten Nutzung von mehrstufigen Modulationsverfahren, die orthogonale Basisfunktionen zur Darstellung eines zu übertragenden Signals benutzen und die zum Beispiel das bekannte Huffman-Verfahren als Quellencodierverfahren anwenden, sind in F.R. Kschischang, S. Pasupathy, "Optimal Nonuniform Signaling for Gaussian Channels", IEEE Transactions on Information Theory, Vol. 39, No. 3, May 1993, pp. 281-300, veröffentlicht. Praktische Implementationen dieser Untersuchungen in Form von Schaltungsanordnungen bzw. entsprechender Verfahren zum Betreiben solcher Schaltungsanordnungen sind jedoch nicht angegeben.

In US-A-5 493 586 ist ein Verfahren für Signalkonstellationen mit $2^q$ Signalpunkten beschrieben. Dieses Verfahren greift auf das Verfahren zur Signalaufweitung zurück, bei dem $2^q$ Bits auf $2^{(q+1)}$ Signalpunkte abgebildet werden. Dieses Verfahren ist außerdem sehr heuristisch, das heißt es wird versucht wie bei den bekannten Verfahren, wo eine Expansion der Signalkonstellation von $2^q$ zu $2^{(q+1)}$ vorgenommen wird, diese Expansion geschickter zu realisieren, um die Signalenergie zu verringern. Dies wird durch entsprechende Umschaltung zwischen mehreren Signalkonstallationen mit jeweils einer Zweierpotenz an Signalpunkten erreicht.

In EP-A-0 703 689 wird ein Verfahren beschrieben, mit Hilfe dessen die Spitzenleistung, die durch eine entsprechende Filterung reduziert wird, beschrieben. Eine Minimierung der durchschnittlichen Leistung bzw. Maximierung der Datenrate als Ziel ist in dieser Schrift nicht angegeben.

In EP-A-0 674 413 wird zwischen verschiedenen Datenraten fehlerabhängig umgeschaltet, wobei unterschiedliche Verfahren eingesetzt werden können.

Nach Livingston J N: "Shaping Using Variable-Size Regions" in IEEE Transactions on Information Theory, Bd. 38, Nr. 4, 1. Juli 1992, Seiten 1347-1353, XP000287144 New York, US, werden die Signalpunkte derart kopiert, daß die Wahrscheinlichkeiten für die entsprechenden Signalpunkte gleich groß sind. Hier werden wiederum Regionen unterschiedlicher Fläche betrachtet, die speziell auf das Verfahren zugeschnitten werden.

US-A-5 583 892 beinhaltet sowohl eine Methode als auch ein System zur Durchführung der Übertragung von digitalen Daten durch Codierung von Bitinformationen in Form von Impulsen, wobei zwei verschiedene unterscheidbare Formen von Impulsen in Bezug auf ihre Amplitudenvariation entlang der Zeitachse dargestellt werden. Eine Minimierung der durchschnittlichen Leistung bzw. Maximierung der Datenrate ist nicht angegeben.

Der Erfindung liegt deshalb die Aufgabe zugrunde, ein Verfahren und eine Schaltungsanordnung zur verbesserten Datenübertragung mit effizienter Nutzung von mehrstufigen Modulationsverfahren zu schaffen, die eine optimale Nutzung der Signalenergie von Signalkonstellationen ermöglichen und wodurch häufig benutzte Signalkonstellationen, wie zum Beispiel 16-QAM, in einfacher und optimaler Weise zur Übertragung geringerer Datenraten genutzt werden können.

Die erfindungsgemäße Lösung der Aufgabe des Verfahrens ist im Kennzeichen des Patentanspruchs 1 charakterisiert.

Weitere Ausgestaltungen des Verfahrens sind in den Patentansprüchen 2 und 3 charakterisiert.

Die erfindungsgemäße Lösung für eine Schaltungsanordnung ist im Kennzeichen des Patentanspruchs 4 charakterisiert.

Weitere Lösungen und Ausgestaltungen der Erfindung sind in der nachfolgenden detaillierten Beschreibung angegeben.

Das hier beschriebene Verfahren und die beschriebene Schaltungsanordnung ermöglichen die optimale Nutzung der Signalenergie von Signalkonstellationen. Dies kann für technische Anwendungen in zweierlei Hinsicht von Vorteil sein. Zum einen können Signalkonstellationen, die sehr effizient sind, allerdings den Nachteil haben, daß die Anzahl der Signalpunkte keine Zweierpotenz ist, nun auf einfache Art und Weise an praktisch verwendete Datenformate, wie zum Beispiel eine Bitfolge, angepaßt werden. Zum anderen können häufig benutzte Signalkonstellationen, wie zum Beispiel 16-QAM, in einfacher Weise optimal dazu genutzt werden, um geringere Datenraten zu übertragen. So kann die 16-QAM Signalkonstellation dazu benutzt werden, um im Mittel 3 Bit pro Signalpunkt zu übertragen, statt der üblichen 4 Bit pro Signalpunkt. Dies kann zum Beispiel technisch nützlich sein, um in bestehenden Sendern und Empfängern, die etwa 8-QAM mit den Punkten { (+-1/2, +-1/2), (+-(1+√3)/2,0), (0,+-(1+√3)/2 } als Signalkonstellation benutzen (also 3 Bit pro Signalpunkt), auf 16-QAM mit optimierten Wahrscheinlichkeiten zu wechseln, bei gleichzeitigem Leistungsgewinn von ca. 1 dB.

Das Verfahren hat noch eine weitere Eigenschaft, die sich vorteilhaft nutzen läßt. Dies ist die besonders einfach zu bewerkstelligende Umcodierung, wenn der Eingangsdatenstrom eine gleich verteilte Folge, insbesondere Bitfolge ist. Die Umcodierung kann dann mit einem verlustlosen Dekompressionsverfahren wie etwa dem Huffman-Verfahren erfolgen. Die inverse Umcodierungsoperation auf der Empfängerseite erfolgt demgemäß mit dem zugehörigen Kompressionsverfahren. Eine gleichverteilte Folge bzw. Bitfolge erhält man zum Beispiel durch Verschlüsselung. Dies bedeutet, daß man die gegebenenfalls lästige Gewährleistung bzw. Erzeugung einer solchen Folge durch Hinzufügen eines Mehrwertes, nämlich der Verschlüsselung, erreichen kann. Da in zukünftigen Übertragungssystemen die Verschlüsselung eine immer größere Rolle spielen wird, und heute bei vielen Systemen schon mitgeliefert wird, ist das neue Verfahren besonders praktisch. Bei der Umcodierung von dem ankommenden Quellbitstrom zu den Signalpunkten, die durch den Kanal übertragen werden, wird ein Zwischenregister als Puffer benutzt, das dazu dient, die durch die Übertragung durch den Kanal auftretende zeitlich schwankende Bitrate an die Bitrate der Quelldaten anzupassen. Bei einer Schaltungsimplementierung hat dieses Zwischenregister eine bestimmte feste Länge. Daraus resultiert in der Praxis das Problem eines sogenannten Pufferüberlaufs. Um dieses Problem zu lösen, wird hier vorgeschlagen, die Kanaldatenrate größer als die Quellendatenrate zu wählen, wobei es vorteilhaft ist, die Kanaldatenrate geringfügig größer als die Quelldatenrate zu wählen. Dadurch ist es möglich, mit verhälnismäßig geringem Aufwand die Zwischenregisterlänge bzw. Pufferlänge anzugeben, so daß es nur noch mit vernachläßigbar kleiner (bekannter) Wahrscheinlichkeit zu einem Überlauf kommt. Bei größerer Kanaldatenrate als die Quellendatenrate kann es vorkommen, daß der Kanal bereit ist, Informationen zu übertragen, die von der Quelle noch nicht bereitgestellt werden. Dieser Effekt wird hier genutzt, in dem man zum Beispiel statt der Quelldaten Synchronisationsdaten überträgt. Eine weitere Lösung besteht darin, statt der Synchronisationsdaten auch sonstige Header- bzw. Nutzdaten zu übertragen. Je größer die Kanaldatenrate ist, desto kürzer kann das Zwischenregister gewählt werden.

Weitere Vorteile, Merkmale und Anwendungsmöglichkeiten der vorliegenden Erfindung ergeben sich aus den nachfolgenden Ausführungsbeispielen, die anhand der Zeichnungen und Tabellen beschrieben werden.

In der Beschreibung, in den Patentansprüchen, in der Zusammenfassung und in den Figuren der Zeichnung werden die in der hinten anhängenden Liste der Bezugszeichen verwendeten Begriffe und Bezugszeichen verwendet.

Die Erfindung wird nun anhand von Ausführungsbeispielen näher erklärt. In der Zeichnung bedeuten:

Fig. 1 eine 16-QAM Signalkonstellation;

Fig. 2 eine hexagonale Signalkonstellation;

Fig. 3+6 ein Prinzipschaltbild einer Schaltungsanordnung, die zur verbesserten Datenübertragung mit Hilfe effizienter Nutzung von mehrstufigen Modulationsverfahren dient;

Fig. 4 eine Tabelle 1, die die Wahrscheinlichkeiten p1, p2, p3, p4 für die Signalpunkte von Fig. 2 angibt und

Fig. 5 eine Tabelle 2, die die Abbildung der Binärdaten zu den Signalpunkten und umgekehrt darstellt.

Wie bereits ausgeführt wurde, benutzen bekannte Übertragungsverfahren orthogonale Basisfunktionen zur Darstellung des zu übertragenden Signals. Ein Nachrichtensignal s(t) wird hierbei als Summe von orthogonalen Basisfunktionen dargestellt. Ein Nachrichtensignal kann als Punkt im K-dimensionalen Raum angesehen werden. Die Gesamtheit aller zulässigen Signalpunkte wird als Signalkonstellation bezeichnet, wobei die in Fig. 1 abgebildete sogenannte 16-QAM Signalkonstellation, die eine der zweidimensionalen Signalkonstellationen darstellt, besonders beliebt ist.

Hat eine Signalkonstellation insgesamt M Signalpunkte, von denen je $M_j$ die Signalenergie $E_j$ haben und ist die Wahrscheinlichkeit für das Auftreten eines solchen Signalpunktes gleich $p_j$, so erreicht man die nach Leistung bzw. Informationsrate bei dieser Leistung optimalen Werte durch Einstellung der Wahrscheinlichkeiten gemäß der unten angegebenen Formel. Der Wert L gibt an, wieviel verschiedene Energiestufen insgesamt auftreten.

$$p_j = p_1 \, (p_L/p_1)^{(E_j-E_1)/(E_L-E_1)} \qquad j = 1,2,\ldots, L \text{ und } E_{j+1}>E_j$$

Als Beispiel wird hier die hexagonale Signalkonstellation in Fig. 2 angegeben. Aus Normierungsgründen ist der Mindestabstand der Signalpunkte zu eins gewählt. Hier sind L = 4 Energiestufen vorhanden. $E_1 = 0$, $E_2 = 1$, $E_3 = 3$ und $E_4 = 4$. Es gibt einen Signalpunkt mit Signalenergie Null ($M_1 = 1$) und je 6 Signalpunkte mit Signalenergieen 1, 3 und 4, das heißt also $M_2 = M_3 = M_4 = 6$.

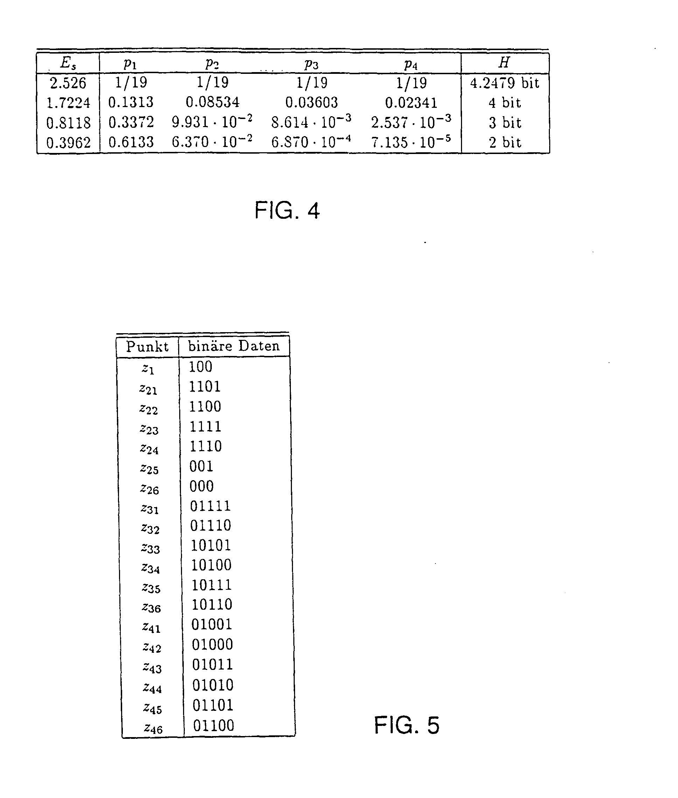

Um zum Beispiel einen Datenstrom mit einer bestimmten Wahrscheinlichkeitsverteilung auf die entsprechenden Signalpunkte abzubilden, wird ein verlustloser Datenkompressionsalgorithmus, wie zum Beispiel das Huffman-Verfahren, benutzt. Dieser Datenkompressionsalgorithmus sorgt dafür, daß die entsprechenden Signalpunkte mit der oben angegebenen Wahrscheinlichkeit auftreten. Das Huffman-Verfahren ist zum Beispiel beschrieben in D.A. Huffman, " A Method for the Construction of Minimum Redundancy Codes", Proc. IRE, Vol. 40, Sept. 1952, Seiten 1098-1101. Im nachfolgenden Beispiel wird eine binäre Bitfolge, bei der die Wahrscheinlichkeit für Einsen und Nullen gleich ist und die Bits statistisch unabhängig sind, umcodiert und zwar so, daß mit der in Fig. 2 dargestellten Signalkonstellation mit 19 Signalpunkten effizient im Mittel H = 4 Bits pro Signalpunkt übertragen werden können. Aus der angegebenen Tabelle 1 nach Fig. 4 erhält man dann die Wahrscheinlichkeiten für das Auftreten der einzelnen Signalpunkte. Anwendung eines Datenkompressionsverfahrens führt auf eine Zuordnung, wie man sie beispielsweise in Tabelle 2 findet. Mit der in Tabelle 2 gemäß Fig. 5 dargestellten Zuordnung kommt man der optimalen mittleren Signalenergie $E_s = 1,7224$ sehr nahe. Man erhält eine mittlere Signalenergie von 1,8125. Zum Vergleich, die herkömmliche 16-QAM Signalkonstellation hat eine mittlere Signalenergie von 2,5. Das heißt mit anderen Worten, gegenüber der bekannten 16-QAM erhält man bei diesem einfachen Verfahren eine Verbesserung von 10 lg (2.5/1.8125) dB ,

das heißt etwa 1,4 dB. Mit komplexeren Zuordnungen kann man sich dem optimalen Wert beliebig annähern. Zur Veranschaulichung, mit obiger Zuordnung würde die mit einer Münze erzeugte Bitfolge 011101000011111001110111110001 dann mit den Signalpunkten $Z_{32}$ $Z_1$ $Z_{25}$ $Z_{23}$ $Z_{25}$ $Z_{21}$ $Z_{24}$ $Z_{25}$ übertragen. Dabei ist $Z_1$ der Signalpunkt mit Energie Null, $Z_{2j}$, wobei j = 1..6 ist, sind die Signalpunkte mit Energie 1, $Z_{3j}$ sind die Signalpunkte mit Energie 3 und $Z_{4j}$ sind die Punkte mit Energie 4. Die Decodierung nach der Übertragung folgt entsprechend.

Im folgenden wird anhand eines Prinzipschaltbildes nach Fig. 3 der Aufbau einer Schaltungsanordnung zur Durchführung des oben beschriebenen Verfahrens näher erklärt.

Es wird angenommen, daß eine Datenquelle 1 einen Datenstrom 2 liefert. Ein Umcodierer 3 sorgt dann dafür, daß ein Modulator 4 die entsprechenden Signalpunkte mit der richtigen Wahrscheinlichkeit auswählt. Nach Übertragung des Datenstromes 2 über einen Übertragungskanal 5 folgt nach einem nachgeschalteten Demodulator 6 mit Hilfe eines Umcodierers 7 die entsprechende inverse Operation, worauf schließlich der Datenstrom 2 zu einer Datensenke 8 gelangt. Der jeweilige Datenstrom 2 ist auf den Verbindungs- bzw. Übertragungsleitungen oder -kanälen zwischen den Komponenten 1, 3 bis 8 durch Pfeilspitzen auf den jeweiligen Leitungen bzw. Kanälen dargestellt.

Bei der Umcodierung von dem ankommenden Quellbitstrom zu den Signalpunkten, die durch den Kanal übertragen werden, wird ein nicht dargestelltes Zwischenregister als Puffer eingefügt, das dazu dient, die durch die Übertragung durch den Kanal auftretende zeitlich schwankende Bitrate an die Bitrate der Quelldaten anzupassen. Das Zwischenregister bzw. der Puffer hat in jeder Implementation in Form einer Schaltung eine bestimmte Länge, woraus sich in der Praxis ein Problem ergeben kann, das in der Möglichkeit eines Überlaufs besteht. Dieses Problem kann dadurch gelöst werden, daß man die Kanaldatenrate etwas größer als die Quellendatenrate wählt. Damit läßt sich mit verhältnismäßig geringem Aufwand die Pufferlänge bzw. Zwischenregisterlänge angeben, so daß es nur mit vernachläßigbarer kleiner (bekannter) Wahrscheinlichkeit zu einem Pufferüberlauf bzw. Zwischenregisterüberlauf kommt.

Wählt man die Kanaldatenrate geringfügig größer als die Quelldatenrate, so kann es in der praktischen Realsierung einer Schaltungsanordnung vorkommen, daß der Kanal bereit ist, Informationen zu übertragen, die von der Quelle noch nicht bereitgestellt werden.

Diesen Effekt kann man vorteilhaft nutzen, in dem man statt der Quelldaten Synchronisationsdaten überträgt.

Außerdem können statt der Synchronisationsdaten auch sonstige Header- bzw. Nutzdaten übertragen werden. Je größer die Kanaldatenrate im Verhältnis zur Quelldatenrate ist, umso kürzer kann das Zwischenregister bzw. der Zwischenpuffer gewählt werden.

Eine weitere Variante mit diesem Bufferüberlauf bzw. Unterlauf umzugehen ist, in dem Umcodierer 3 zwei oder gegebenenfalls noch mehr Umcodiertabellen vorzusehen, wobei die eine Tabelle zu einer Kanaldatenrate, die größer als die Quelldatenrate ist, führt und die andere Tabelle zu einer Kanaldatenrate, die kleiner als die Quelldatenrate ist. In Abhängigkeit vom Zustand des Zwischenspeichers kann der Umcodierer 3 dann gesteuert werden. Das heißt, wenn der Zwischenspeicher Gefahr läuft überzulaufen, wird die Kanaldatenrate gewählt, die größer als die Quelldatenrate ist. Im umgekehrten Fall, wenn fast keine Daten mehr im Zwischenspeicher sind, wird die Kanaldatenrate gewählt, die kleiner als die Quelldatenrate ist.

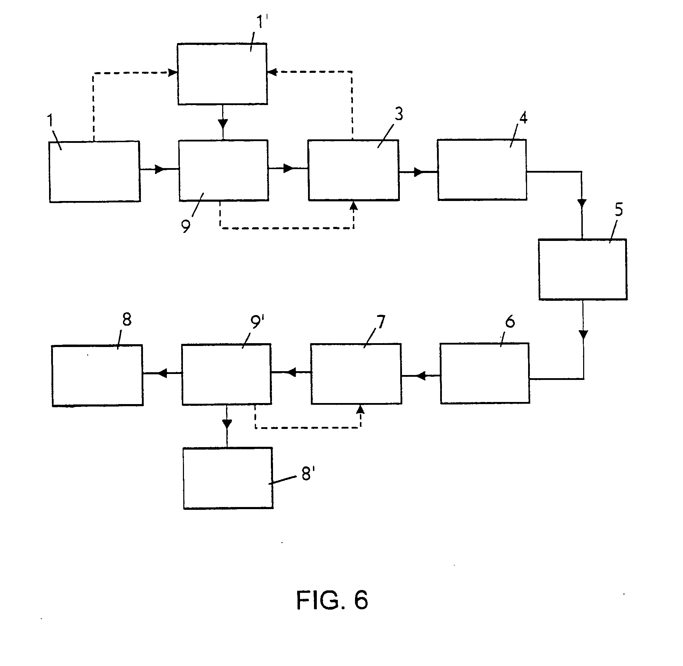

In Fig. 6, die von Fig. 3 abgeleitet ist, ist der allgemeinste Fall, der obige Möglichkeit einschließt, dargestellt. Die Möglichkeit, den Umcodierer 3 abhängig vom Zwischenspeicher 9 zu steuern, ist in Fig. 6 durch die gestrichelte Linie vom Zwischenspeicher mit Steuereinheit bzw. Recheneinheit 9 zum Umcodierer 3 angezeigt. In Fig. 6 ist ebenfalls eine optionale zweite Datenquelle 1' eingezeichnet (für den Spezialfall, daß die Rate dieser Datenquelle gleich Null ist, verschwindet diese Quelle). Die zweite Datenquelle 1' ermöglicht, wie oben beschrieben, die Übertragung von zusätzlichen Daten. Die gestrichelten Linien vom Umcodierer 3 zur zweiten Datenquelle 1' zeigen an, auf welche Weise man beispielsweise Prüfdaten zur Fehlerkorrektur in das Verfahren integrieren kann. Die Quelldatenrate und die Rate der erzeugten Prüfzeichen dürfen zusammen im Mittel die mittlere Kanaldatenrate nicht übersteigen. Analog zur zweiten Datenquelle 1' und dem Zwischenspeicher mit Steuer- bzw. Recheneinheit 9 sind zwischen Datensenke 8 und inversen Umcodierer 7 eine zweite Datensenke 8' und ein Zwischenspeicher mit Steuer- und Recheneinheit 9' eingefügt.

Zur weiteren Verbesserung des Verfahrens kann man spezielle Codierverfahren, die zum Beispiel für QAM oder hexagonale Signalkonstellationen entworfen wurden und in den Artikeln K. Huber, "Codes over Gaussian Integers", IEEE Transactions on Information Theory, Vol. 40, No. 1, January 1994, pp. 207-216 und K. Huber, "Codes over Eisenstein-Jacobi Integers", Finite Fields: Theory, Applications and Algorithms, (Las Vegas 1993), Contemporary Math. Vol. 168, American Math. Society, Providence, R1, pp. 165-179 sowie K. Huber, "Codes over Tori", IEEE Transactions on Information Theory, Vol. 43, No. 2, March 1997, pp. 740-744, zu finden sind, benutzen.

**Liste der Bezugzeichen**

| | |
|---|---|
| 1,1' | Datenquelle |
| 2 | Datenstrom |
| 3 | Umcodierer |
| 4 | Modulator |
| 5 | Kanal |
| 6 | Demodulator |
| 7 | Inverser Umcodierer |
| 8, 8' | Datensenke |
| 9,9' | Zwischenspeicher mit Steuer- bzw. Recheneinheit |

**Patentansprüche**

1. Verfahren zur Datenübertragung unter Verwendung eines mehrstufigen Modulationsverfahrens, das orthogonale Basisfunktionen und eine vorgegebene Signalkonstellation zur Darstellung eines zu übertragenden Signals benutzt, wobei ein Quellencodierverfahren, z.B. das bekannte Huffman-Verfahren, zur Anpassung von Datenfolgen zwecks Benutzung der orthogonalen Basisfunktionen angewendet wird, **dadurch gekennzeichnet, daß** die Signalpunkte der vorgegebenen Signalkonstellation entsprechend der Signalenergien $E_j$ mit verfahrensmäßig vorgegebenen Wahrscheinlichkeiten $P_j$ zur Optimierung der mittleren Signalenergie bzw. Datenrate gemäß Formel

$$p_j = P_1 \ (p_L/p_1)^{(E_j - E_1)/E_L - E_1}$$

$j = 1,2,..., L$ und $E_{j+1} > E_j$
ausgewählt werden.

**2.** Verfahren nach Patentanspruch 1, **dadurch gekennzeichnet,**
**daß** zum Schutz gegen Übertragungsfehler ein dem Modulationsverfahren und Kanal angepaßter und fehlerkorrigierender Block- oder Faltungs-Code verwendet wird, dessen Prüfzeichen mittels einer zweiten Datenquelle (1') eingefügt werden.

**3.** Verfahren nach Patentanspruch 1, **dadurch gekennzeichnet,**
**daß** die Kanaldatenrate größer als die Quelldatenrate gewählt wird, und
**daß** beim Nichtvorliegen von Quellbits Synchronisationsdaten und sonstige Verwaltungs- oder Nutzdaten übertragen werden.

**4.** Schaltungsanordnung zur Datenübertragung unter Verwendung eines mehrstufigen Modulationsverfahrens, das orthogonale Basisfunktionen und eine vorgegebene Signalkonstellation zur Darstellung eines zu übertragenden Signals benutzt, wobei ein Quellencodierverfahren, z.B. das bekannte Huffman-Verfahren, zur Anpassung von Datenfolgen zwecks Benutzung der orthogonalen Basisfunktionen angewendet wird, **dadurch gekennzeichnet,**
**daß** einer Datenquelle (1) für einen Datenstrom (2) ein Umcodierer (3) zur Durchführung des Quellencodierverfahrens nachgeschaltet ist, dessen Ausgang mit einem Modulator (4) zur Auswahl der Signalpunkte der vorgegebenen Signalkonstellation entsprechend der Signalenergien $E_j$ mit verfahrensmäßig vorgegebenen Wahrscheinlichkeiten $P_j$ zur Optimierung der mittleren Signalenergie bzw. Datenrate gemäß Formel

$$p_j = P_1 \, (p_L/p_1)^{(E_j - E_1)/E_L - E_1}$$

$j = 1,2,..., L$ und $E_{j+1} > E_j$ verbunden ist,
**daß** der Ausgang des Modulators (4) mit dem Eingang eines Kanals (5) verbunden ist, dessen Ausgang mit dem Eingang eines Demodulators (6) verbunden ist, dem ein Codierer (7) zur Durchführung der inversen Operation zu der des Codierers (3) nachgeschaltet ist und
**daß** der Ausgang dieses Codierers (7) mit einer Datensenke (8) für den Datenstrom (2) verbunden ist, und
**daß** ein Zwischenspeicher mit einer Steuer/Recheneinheit (9) vorhanden ist, die den Umcodierer (3) zwischen mindestens zwei Umcodierungstabellen wechseln läßt, derart, daß es zu keinem Speicherüberlauf kommt, und daß entsprechende inverse Einrichtungen (7, 9') auf der Empfänger- bzw. Datensenkenseite vorgesehen sind.

**Claims**

**1.** Method for data transmission using a multi-level modulation method employing orthogonal basis functions and a defined signal constellation to represent a signal which is to be transmitted, wherein a source coding method, such as the known Huffman method, is employed for the adaptation of data strings for the purpose of using the orthogonal basis functions, **characterized in that**
the signal points of the defined signal constellation are selected according to the signal energies $E_j$ with method-defined probabilities $P_j$ in order to optimize the average signal energy and/or data rate according to the formula

$$p_j = p_1 \, (p_L / p_1)^{(E_j - E_1) / (E_L - E_1)}$$

$j = 1, 2, ..., L$ and $E_{j+1} > E_j$

**2.** Method according to claim 1, **characterized in that**
for protection against transmission errors, use is made of an error-correcting block or convolution code adapted to the modulation method and channel, the check characters of said code being inserted by means of a second data source (1').

**3.** Method according to claim 1, **characterized in that**
the channel data rate is made greater than the source data rate, and
if no source bits are present, synchronization data and other administration or user data are transmitted.

**4.** Circuit arrangement for data transmission using a multi-level modulation method employing orthogonal basis functions and a defined signal constellation to represent a signal which is to be transmitted, wherein a source coding method, such as the known Huffman method, is employed for the adaptation of data strings for the purpose of using the orthogonal basis functions, **characterized in that**
a data source (1) for a data stream (2) is followed by a recoder (3) for execution of the source coding method, the output of which recoder (3) is connected to a modulator (4) for selection of the signal points of the defined signal constellation according to the signal energies $E_j$ with method-defined probabilities $P_j$ in order to optimize the average signal energy and/or data rate according to the formula

$$p_j = p_1 \, (p_L \, / \, p_1)^{(E_j \, - \, E_1) \, / \, (E_L \, - \, E_1)}$$

j = 1, 2, ..., L and $E_{j+1} > E_j$
the output of the modulator (4) is connected to the input of a channel (5), the output of which is connected to the input of a demodulator (6) which is followed by a coder (7) for execution of the inverse operation to that of the coder (3); and
the output of said coder (7) is connected to a data sink (8) for the data stream (2); and
a temporary storage with a control/computing unit (9) is provided, said control/computing unit (9) causing the recoder (3) to switch between at least two recoding tables such that there is no storage overflow, wherein corresponding inverse means (7, 9') are provided at the receiver and data-sink ends.

**Revendications**

**1.** Procédé de transmission de données impliquant un procédé de modulation multiniveau utilisant des fonctions de base orthogonales et une constellation de signaux prédéfinie pour représenter un signal à transmettre, un procédé de codage de sources, tel que la méthode connue de Huffmann, étant appliqué de manière à adapter des séquences de données aux fins de l'utilisation des fonctions de base orthogonales, **caractérisé en ce que** les points de signaux de la constellation de signaux prédéfinie sont sélectionnés en fonction des énergies des signaux $E_j$ à l'aide de probabilités $P_j$ prédéfinies selon le procédé pour optimiser l'énergie moyenne du signal ou le débit de données selon la formule

$$p_j = P_1 \, (p_L \, / \, p_1)^{(E_j - E_1) \, / \, (E_L - E_1)}$$

j = 1, 2,..., L et $E_{j+1} > E_j$

**2.** Procédé selon la revendication 1, **caractérisé en ce que**, pour la protection contre des erreurs de transmission, un code en bloc ou code convolutif adapté au procédé de modulation et au canal et corrigeant les erreurs est utilisé dont les caractères de contrôle sont insérés moyennant une seconde source de données (1').

**3.** Procédé selon la revendication 1, **caractérisé en ce que** le débit de données de canal est choisi plus grand que le débit de données de source et **en ce que**, en l'absence de bits de sources, des données de synchronisation et d'autres données d'administration ou d'exploitation sont transmises.

4. Configuration de circuit pour la transmission de données à l'aide d'un procédé de modulation multiniveau utilisant des fonctions de base orthogonales et une constellation de signaux prédéfinie pour représenter un signal à transmettre, un procédé de codage de sources, tel que le procédé connu de Huffman, étant appliqué de manière à adapter des séquences de données aux fins de l'utilisation des fonctions de base orthogonales, **caractérisée en ce qu'**un transcodeur (3) d'un courant de données (2) est prévu en aval d'une source de données (1) pour réaliser le procédé de codage de sources, la sortie du transcodeur étant reliée à un modulateur (4) pour la sélection des points de signaux de la constellation de signaux prédéfinie en fonction des énergies des signaux $E_j$ à l'aide de probabilités $P_j$ prédéfinies selon le procédé pour optimiser l'énergie moyenne du signal ou le débit de données selon la formule

$$p_j = P_1 \, (p_L / p_1)^{(E_j - E_1) / (E_L - E_1)}$$

$j = 1, 2, ..., L$ et $E_{j+1} > E_j$

**en ce que** la sortie du modulateur (4) est reliée à l'entrée d'un canal (5) dont la sortie est reliée à l'entrée d'un démodulateur (6), en aval duquel un codeur (7) est prévu pour réaliser l'opération inverse de celle du codeur (3) et

**en ce que** la sortie du codeur (7) est reliée à un puits de données (8) pour le courant de données (2), et

**en ce qu'**une mémoire intermédiaire comportant une unité de commande / de calcul (9) permettant au transcodeur (3) de basculer entre au moins deux tableaux de transcodage de manière à empêcher un dépassement de mémoire, et en ce que des unités inverses (7, 9') correspondantes sont prévues côté destinataire ou côté puits de données.

FIG. 1

FIG. 2

FIG. 3

| $E_s$ | $p_1$ | $p_2$ | $p_3$ | $p_4$ | $H$ |
|---|---|---|---|---|---|
| 2.526 | 1/19 | 1/19 | 1/19 | 1/19 | 4.2479 bit |
| 1.7224 | 0.1313 | 0.08534 | 0.03603 | 0.02341 | 4 bit |
| 0.8118 | 0.3372 | $9.931 \cdot 10^{-2}$ | $8.614 \cdot 10^{-3}$ | $2.537 \cdot 10^{-3}$ | 3 bit |
| 0.3962 | 0.6133 | $6.370 \cdot 10^{-2}$ | $6.870 \cdot 10^{-4}$ | $7.135 \cdot 10^{-5}$ | 2 bit |

## FIG. 4

| Punkt | binäre Daten |
|---|---|
| $z_1$ | 100 |
| $z_{21}$ | 1101 |
| $z_{22}$ | 1100 |
| $z_{23}$ | 1111 |
| $z_{24}$ | 1110 |
| $z_{25}$ | 001 |
| $z_{26}$ | 000 |
| $z_{31}$ | 01111 |
| $z_{32}$ | 01110 |
| $z_{33}$ | 10101 |
| $z_{34}$ | 10100 |
| $z_{35}$ | 10111 |
| $z_{36}$ | 10110 |
| $z_{41}$ | 01001 |
| $z_{42}$ | 01000 |
| $z_{43}$ | 01011 |
| $z_{44}$ | 01010 |
| $z_{45}$ | 01101 |
| $z_{46}$ | 01100 |

## FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5493586 A
- EP 0703689 A
- EP 0674413 A
- XP 000287144
- US 5583892 A

**In der Beschreibung aufgeführte Nicht-Patentliteratur**

- **BUCH R.E. BLAHUT.** Digital Transmission of Information. Addison-Wesley, 1990
- **F.R. KSCHISCHANG ; S. PASUPATHY.** Optimal Nonuniform Signaling for Gaussian Channels. *IEEE Transactions on Information Theory,* Mai 1993, vol. 39 (3), 281-300
- **LIVINGSTON J N.** Shaping Using Variable-Size Regions. *IEEE Transactions on Information Theory,* 01. Juli 1992, vol. 38 (4), 1347-1353
- **D.A. HUFFMAN.** A Method for the Construction of Minimum Redundancy Codes. *Proc. IRE,* September 1952, vol. 40, 1098-1101
- **K. HUBER.** Codes over Gaussian Integers. *IEEE Transactions on Information Theory,* Januar 1994, vol. 40 (1), 207-216
- Codes over Eisenstein-Jacobi Integers. **K. HUBER.** Finite Fields: Theory, Applications and Algorithms. American Math. Society, 1993, vol. 168, 165-179
- **K. HUBER.** Codes over Tori. *IEEE Transactions on Information Theory,* Marz 1997, vol. 43 (2), 740-744